# EUROPEAN PATENT APPLICATION

(11) **EP 0 948 883 A1**
(43) Date of publication of application: **13.10.1999**
(21) Application number: 98106631.9
(22) Date of filing: 09.04.1998
(51) Int. Cl.: A01D 34/00, A01D 34/74, A01D 34/64

(54) **Moving machine**

(71) Applicant: Tecnoverde di Salvatore Franco, 41011 Campogalliano (MO) (IT)
(72) Inventor: Franco, Salvatore, 41011 Campogalliano (Modena) (IT)
(74) Representative: Rinaldi, Carlo

(57) **Abstract**

A mowing machine comprises a frame (1) supporting the motor and the front wheels; an end of the frame (1) is integral with a fork (2) which supports a tubular sleeve (3) fitted with an internal hollow (4) crossed by a shaft (5) which supports the front wheels (6); the front wheels (6) are found inside the area held by a rotating mower (8) rotated by the motor through a pulley (9) integral with a hub (10) and a jointing plate (11); the jointing plate (11) presenting a central hole (12) crossed by the shaft (5) held by a thrust bearing (17) for vertical shafts; the bearing (17) is jointed to an adjusting device used for changing the relative position of the frame (1) with respect to the shaft (5) in order to adjust the height of the rotating mower (8) with respect to the front wheels (6).

## Description

The present invention relates to the mowing machines used for mowing and plane the grass of gardens, meadows, playing and golf fields and the like.

A mowing machine mainly consists of a frame which supports a motor mechanically connected to the mowing apparatus and, in given cases, to the machine driving system consisting of two rear wheels; a system of front wheels is supported by the frame and co-operates with a handlebar held by the frame for driving the machine.
In general, the system of front wheels consists of two wheels, a first wheel protrudes from the right side, while a second wheel protrudes from the left front side of the machine; this disposition of the front wheels increases the stability of the machine used for mowing the grass in uneven meadows because of depressions or hollows.
The mowing apparatus consists of a rotating mower connected to the motor by means of mechanical connecting devices; the rotating mower is protected by a box to prevent the mower from coming into contact with persons or objects.
The problems unsolved by the known mowing machines are mainly the following:
The front wheels, which protrude from the front side of the machine frame, tamp the grass on which they tread, preventing the grass from being mowed by the mower; therefore, after a mowing operation, a series of strips of non mowed grass is created interrupting the homogeneity of the grass edge.

The same front wheels increase the external dimensions of the machine and, in particular they form an appendix preventing the mowing apparatus from reaching and mowing the grass which is near walls, trees, posts or similar obstacles.

The purpose of the present invention is to remedy these defects.
The invention, as claimed, solves the problem of creating a mowing machine by means of which the result is obtained that the grass to be mowed is not tamped by the front wheels, so that it can be mowed by the mowing apparatus of the machine homogeneously.

The advantages offered by the machine mainly consist in that the front wheels are located under the mowing apparatus of the machine which, in this way, can reach and mow the grass being found near obstacles.

The mowing machine mainly comprises a frame supporting a motor mechanically connected to a rotating mower, a first system of rear wheels, and a second system of front wheels, a driving device for the machine; the system of front wheels is located inside the area held by the rotating mower.

Advantageously, the mowing machine presents a shaft connected to the system of front wheels, the shaft operating together with first mechanical elements and devices for defining the height of the rotating mower with respect to the system of front wheels.

Preferably, the shaft co-operates with second mechanical elements and devices for adjusting the height of the rotating mower with respect to the system of front wheels.

Other advantages, features and aims of the invention, may be more readily understood by referring to the accompanying drawings, which concern preferred embodiments, in which:
Fig.1 is a schematic view of the mowing apparatus and the front wheels in a first embodiment of the machine;
Fig.2 is a schematic view of the mowing apparatus and the front wheels in a second embodiment of the machine.

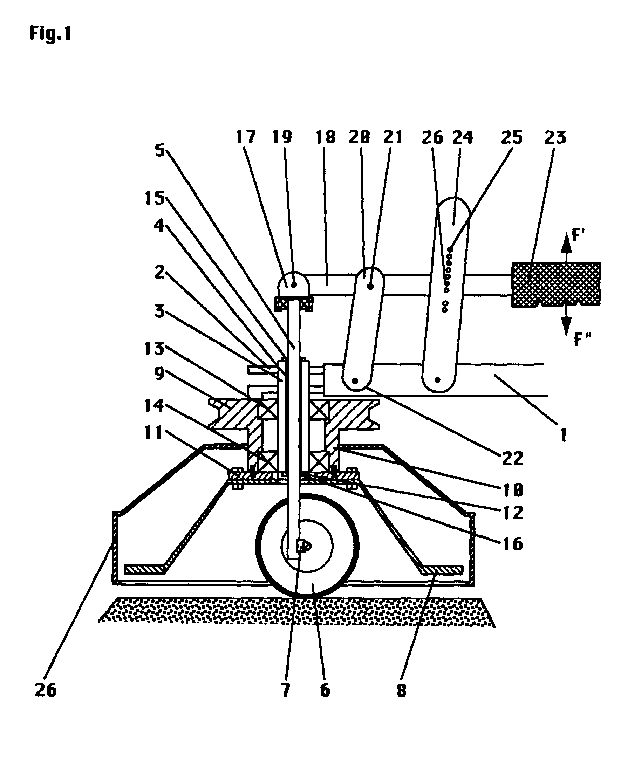

The part of the machine shown in Fig.1 comprises, among other things, a frame 1 which holds mechanical elements (not shown), like the motor, the rear wheels and other devices the presence of which in the machine is obvious. The shown end of the frame 1 is integral with a fork 2 which holds a tubular sleeve 3, the internal hollow 4 of which is crossed by a shaft 5 supporting the front wheels.

The lower end of the shaft 5 is connected to two front wheels 6 (only the wheel 6 is shown in Fig.1) which cooperate with a handlebar (not shown) for driving the machine. The connection between the hub of one of the wheels 6 and the shaft 5 is obtained by means of a bracket 7; the not shown wheel is splined on the same shaft of the shown wheel 6. The wheels 6 are driven by the pushing of the rear wheels and by the handlebar driving the machine.

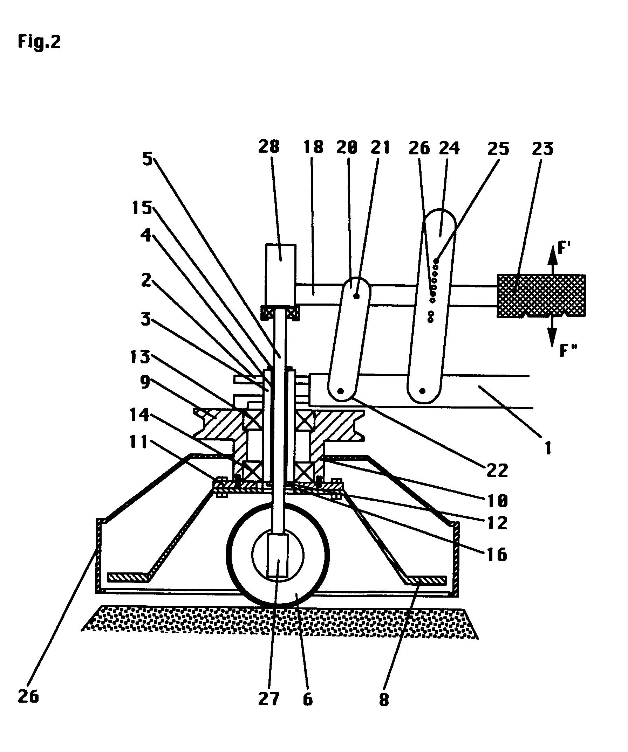

The front wheels 6 are located inside the area held by a rotating mower 8; this collocation of the front wheels 6 allows to solve the previously disclosed problems and other which will be defined below with reference to Fig.2.
The rotating mower 8 is rotated by the motor of the machine by means of a system of transmission which mainly comprises a belt (not shown) connecting a first pulley 9 integral with a hub 10 to a second pulley (not shown) mechanically connected to the crankshaft of the motor; the pulley 9 is integral with the rotating mower 8 through a jointing plate 11 mechanically jointed to the hub 10.
The jointing plate 11 presents a central hole 12 crossed by the shaft 5.
Two bearings 13, 14 are splined on the sleeve 3 for allowing the rotation of the pulley 9 with respect to the tubular sleeve 3.
Two stopping bushings 15, 16 are inserted into both ends of the tubular sleeve 3 for preventing the relative translations of the tubular sleeve 3 with respect to the shaft 5, so that the machine can maintain its stability after the adjusting of its height.

The shaft 5 is supported by a thrust bearing 17 for vertical shafts; the bearing 14 is connected to an adjusting device allowing the changing of the relative position of the frame 1 with respect to the shaft 5 in order to adjust the height of the rotating mower 8 with respect to the wheels 6.
The adjusting device mainly comprises a manoeuvring lever 18, which rotates around a pivot 19 situated in the thrust bearing 17, and a transmission lever 20 articulated between the frame 1 and the manoeuvring lever 18: the articulation of the transmission lever 20 is obtained by means of two pins 21, 22 mounted, respectively, on the manoeuvring lever 18 and on the frame 1; both ends of the transmission lever 20 rotate around the pins 21, 22.

A hand grip 23 is mounted on the free end of the manoeuvring lever 18 and a stopping lever 24 is disposed between the frame 1 and the manoeuvring lever 18; the stopping lever 24 presents a plurality of stopping holes 25, each of which is capable of housing a backstop pin 26 which can be inserted into a not shown hole drilled in the manoeuvring lever 18; the backstop pin 26 is used for stopping the adjusting device in order to obtain the most favourable height of the rotating mower 8 with respect to the wheels 6.

In use, the adjusting of the height of the rotating mower 8 with respect to the wheels 6 is obtained after having disassembled the backstop pin 26 from the stopping lever 24; after this operation, the manoeuvring lever 18 can be rotated around the pivot 19; if the manoeuvring lever 18 is rotated in the direction of the arrow F' the frame 1 is displaced upward together with the rotating mower 8; vice versa, if the manoeuvring lever 18 is rotated in the direction of the arrow F'' the frame 1 is displaced downward together with the rotating mower 8.

Once adjusted the height of the rotating mower 8 with respect to the wheels 6, the backstop pin 26 is introduced into the proper stopping hole 25 allowing the height to be maintained adjusted, and into the corresponding hole of the manoeuvring lever 18.

The machine is further fitted with a box 26 for preventing the rotating mower 8 from coming into contact with persons or objects.

A second embodiment of the machine is schematically shown in Fig.2; this machine differs from the previous only in that a known device 28 is used for driving the front wheels 6. The shaft 5 and the device 28 forming the steering by means of which the machine is driven by the operator.

In an embodiment schematically shown in Fig.2 a device 27 is provided for transmitting the movement to the front wheels 6, the device 27 being mechanically connected to the front wheels 6; the device consists of a shaft 5 rotated by the motor of the machine through known and not represented devices; the shaft 5 is jointed to the axis of the front wheels 6 by means of bevel gears or a worm gear in order to transmit the movement to the front wheels 6, which in this case are driving wheels.

## Claims

1. Mowing machine comprising a frame (1) supporting a motor mechanically connected to a rotating mower (8), a first system of rear wheels and a second system of front wheels (6), a device for driving the machine, the machine being characterised by the fact that the system of front wheels (6) is located inside the area held by the rotating mower (8).

2. Mowing machine as in claim 1, wherein the system of front wheels (6) is connected to a shaft (5) co-operating with first mechanical elements and devices for defining the height of the rotating mower (8) with respect to the system of front wheels (6).

3. Mowing machine as in claim 2, wherein the shaft (5) cooperates with second mechanical elements and devices for adjusting the height of the rotating mower (8) with respect to the system of front wheels (6).

4. Mowing machine as in claim 1, wherein a device (28) is provided for driving the front wheels (6); the shaft (5) and the device (28) form the steering by means of which the machine is driven by an operator.

5. Mowing machine as in claim 1, wherein a device (27) is mechanically connected to the front wheels (6) for transmitting the movement to the front wheels (6).

6. Mowing machine as in claim 5, wherein the device (27) consists of a shaft 5 rotated by the motor of the machine through movement transmitting devices; the shaft (5) is jointed to the axis of the front wheels (6) by means of bevel gears or a worm gear in order to transmit the movement to the front wheels (6), which are driving wheels.
